Europäisches Patentamt

European Patent Office

Office européen des brevets

(19)

(11) Veröffentlichungsnummer: **0 127 030**
**B1**

(12) # EUROPÄISCHE PATENTSCHRIFT

(45) Veröffentlichungstag der Patentschrift:
**12.08.87**

(51) Int. Cl.⁴: **F 16 B 12/50**

(21) Anmeldenummer: **84105296.2**

(22) Anmeldetag: **10.05.84**

(54) **Eckverbindung.**

(30) Priorität: **30.05.83 DE 3319627**

(43) Veröffentlichungstag der Anmeldung:
**05.12.84 Patentblatt 84/49**

(45) Bekanntmachung des Hinweises auf die Patenterteilung:
**12.08.87 Patentblatt 87/33**

(84) Benannte Vertragsstaaten:
**AT CH DE GB IT LI**

(56) Entgegenhaltungen:
**CH-A-391 995**
**DE-A-2 600 816**
**DE-A-2 706 437**
**DE-U-7 522 584**
**DE-U-8 202 245**
**FR-A-2 299 834**
**FR-A-2 432 638**
**US-A-2 604 342**
**US-A-2 932 369**

(73) Patentinhaber: **Baus, Heinz Georg,**
**Wartbodenstrasse 35, CH- 3626 Hünibach- Thun**
**(CH)**

(72) Erfinder: **Baus, Heinz Georg, Wartbodenstrasse 35,**
**CH- 3626 Hünibach- Thun (CH)**

(74) Vertreter: **Klose, Hans, Dipl.- Phys.,**
**Kurfürstenstrasse 32, D-6700 Ludwigshafen (DE)**

## Beschreibung

Die Erfindung betrifft eine Eckverbindung einer ersten und einer zweiten Profilschiene gemäß dem Oberbegriff von Patentanspruch 1.

In der DE-A- 27 06 437 ist eine derartige Eckverbindung von Profilschienen beschrieben. Diese weist jeweils in Längsrichtung verlaufende Hohlkammern auf. Es ist hierbei ein Eckverbinder vorgesehen, der jeweils einen in die Hohlkammer der zugeordneten Profilschiene eingreifenden Zapfen aufweist. Die Profilschienen sind ferner jeweils mit einem als eine Schraube ausgebildeten Verbindungselement mit dem Eckverbinder verbunden. Die Profilschienen liegen jeweils mit ihren Stirnflächen am Eckverbinder an. Beim Zurechtschneiden der Profilschienen muß der Schnitt sehr exakt quer zu ihrer Längsachse bzw. der Hohlkammer erfolgen, um eine plane Anlage an den zugeordneten Flächen des Eckverbinders zu erzielen: anderenfalls ist eine winkelgenaue Ausrichtung der Profilschienen kaum zu erreichen oder es sind hinsichtlich Festigkeit und Zuverlässigkeit der Verbindung nachteilige Verspannungen zwischen Profilschiene und Eckverbinder zu befürchten. Der Montageaufwand ist nicht unbeträchtlich, da für zwei Profilschienen auch zwei Schrauben eingeschraubt werden müssen.

Der Erfindung liegt von daher die Aufgabe zugrunde, eine Eckverbindung der eingangs genannten Art dahingehend weiterzubilden, daß eine winkelgenaue Ausrichtung der beiden Profilschienen mit einem geringen Montageaufwand erreicht wird.

Zur Lösung dieser Aufgabe werden die im Kennzeichen von Patentanspruch 1 angegebenen Merkmale vorgeschlagen.

Die vorgeschlagene Eckverbindung ermöglicht mit einem geringen Montageaufwand zwei Profilschienen maßhaltig und exakt zu verbinden. Bei der Montage muß nach dem Einführen des Eckverbinders mit seinen beiden Zapfen in die jeweiligen Hohlkammern nur noch ein einziges Verbindungselement durch das Loch des inneren Steges der zweiten Profilschiene sowie in die Ausnehmung des ersten Zapfens eingeführt werden, welcher sich in dem Hohlraum der ersten Profilschiene befindet. Die gegenseitige Ausrichtung der beiden Profilschienen wird mittels der beiden Zapfen vorgegeben, so daß auch Ungenauigkeiten beim Zurechtschneiden der Profilschienen auf eine winkelgenaue Ausrichtung derselben keine Auswirkung haben. Die Eckverbindung gelangt vor allem bei Spiegelschränken, und zwar jeweils in den vier Eckbereichen von vier miteinander zu verbindenden Profilschienen, zum Einsatz, wobei die erläuterten Vorteile gerade bei den relativ geringen Abmessungen gegeben sind. Bei geringen Abmessungen, dies gilt auch bei anderen Einsatzgebieten als bei Spiegelschränken, wird die Montage nicht unwesentlich vereinfacht.

Um das Einführen des Verbindungselements in die Ausnehmung des ersten Zapfens sowie das Loch im Ansatz der zweiten Profilschiene zu erleichtern, ragt, gemäß einer Weiterbildung, der genannte Ansatz über eine Endkante des äußeren Steges der zweiten Profilschiene hinaus. Ist das Verbindungselement beispielsweise als eine Schraube ausgebildet, so kann diese samt Schraubenzieher ohne Probleme an der besagten Endkante vorbeigeführt werden.

Um eine spielfreie Eckverbindung zu erhalten, wird ferner vorgeschlagen, daß die geometrische Achse des Loches zur geometrischen Achse der Ausnehmung vom Zapfen in einem Abstand, und zwar in Richtung zum inneren Steg der ersten Profilschiene, angeordnet ist, wobei die zweite Profilschiene mit ihrer Stirnkante der Innenfläche der ersten Profilschiene anliegt. Während der Montage wird beim Einführen des Verbindungselements aufgrund des genannten Abstandes die zweite Profilschiene bezüglich der ersten Profilschiene über den Zapfen des Eckverbinders verspannt. Fertigungsbedingte Toleranzen können somit leicht ausgeglichen werden, und eine spielfreie Verbindung ist gegeben.

Eine besondere Ausgestaltung der Eckverbindung ist dadurch gekennzeichnet, daß der Ansatz und das Loch der zweiten Profilschiene gleichzeitig in einem einzigen Stanzvorgang hergestellt sind. Da die winkelgenaue Ausrichtung der Profilschienen durch die in die Hohlkammern eingreifenden Zapfen vorgegeben wird, sind beim Stanzen keine allzu hohen Anforderungen im Hinblick auf Maßhaltigkeit zu beachten, und eine kostengünstige Fertigung wird gewährleistet.

In einer anderen Ausgestaltung weist der Ansatz mit seiner Stirnfläche sowie der innere Steg mit seiner Stirnfläche einen Abstand zum äußeren Steg der jeweils anderen Profilschiene auf. Die genannten Stirnflächen befinden sich somit immer im inneren der jeweils anderen Profilschiene und sind daher für einen Betrachter der Eckverbindung nicht sichtbar. Eine besondere Bearbeitung der Stirnflächen, wie es beispielsweise nach dem Ausstanzen durch ein Entgraten ansonsten notwendig wäre, entfällt.

Die Erfindung wird nachfolgend an Hand der in der Zeichnung dargestellten Ausführungsbeispiele näher erläutert. Es zeigt

Fig. 1 einen Schnitt durch die Eckverbindung mit zwei Profilschienen,

Fig. 2 einen Schnitt durch die Eckverbindung gemäß Fig. 1, jedoch in einer anderen Schnittebene,

Fig. 3 in einer explosionsartigen Darstellung einer geringfügig abgewandelten Ausführungsform, wobei hier auch die Schnittebenen von Fig. 1 und 2 angedeutet sind.

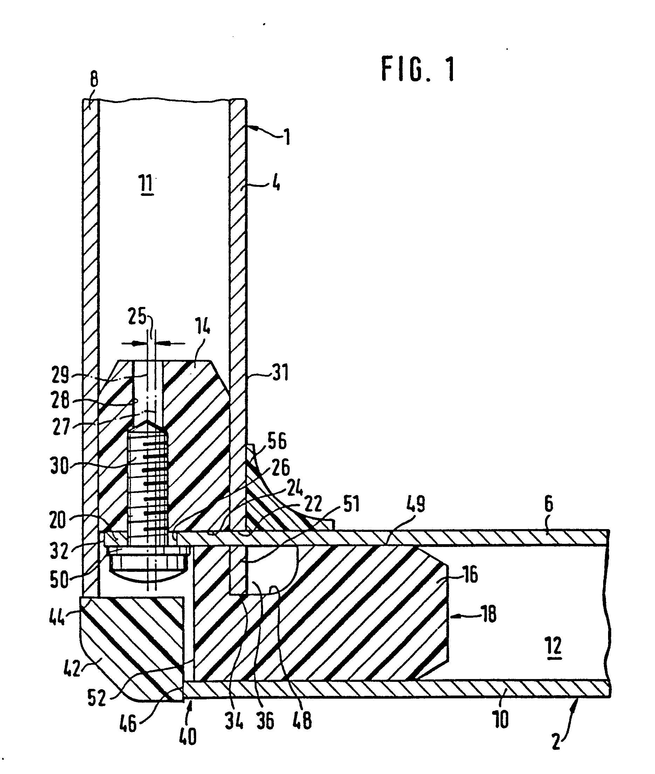

Fig. 1 zeigt eine erste Profilschiene 1 sowie eine zweite Profilschiene 2 die rechtwinkelig zueinander angeordnet sind. Die Profilschienen 1 und 2 weisen jeweils einen inneren Steg 4, 6 sowie einen äußeren Steg 8, 10 auf. Zwischen den genannten Stegen befinden sich Hohlkammern 11, 12 in welche rechtwinkelig angeordnete Zapfen 14, 16 eines Eckverbinders 18 eingesetzt sind.

Die zweite Profilschiene 2 weist einen Ansatz 20 auf, der durch eine Öffnung 22 des inneren Steges 4 der Profilschiene 1 durchgreift. Ferner ist der Ansatz 20 durch eine fluchtende Öffnung 24 des Zapfens 14 vom Eckverbinder 18 hindurchgeführt. Der Ansatz 20 weist im Bereich der Hohlkammer 11 der Profilschiene 1 ein Loch 26 auf, das mit einer Ausnehmung 28 des genannten Zapfens 14 im wesentlichen fluchtet. Die geometrische Achse 27 des Loches 26 ist zur geometrischen Achse 29 der Ausnehmung 28 in einem vorgegebenen Abstand 25 angeordnet, und zwar in Richtung zur Innenfläche 31 der ersten Profilschiene 1, Hierdurch wird eine Verspannung der beiden Profilschienen 1 und 2 sowie des Eckverbinden 18 erreicht, wodurch in besonders einfacher Weise Fertigungstoleranzen ausgeglichen werden und insgesamt eine spielfreie Verbindung sichergestellt wird. In das Loch 26 und die Ausnehmung 28 ist ein Verbindungselement 30, hier in Form einer Schraube, eingeführt. Die Stirnfläche 32 des Ansatzes 20 und ferner die Stirnfläche 34 des inneren Steges 4 der ersten Profilschiene 1 weisen jeweils bezüglich der äußeren Stege 8 bzw. 10 einen Abstand auf. Die Stirnfläche 34 ragt in eine Aussparung 36 des Eckverbinders 18. Im Eckbereich ist an der Außenseite 40 ein Verblendungselement 42 vorgesehen, welches teilweise an den Stirnkanten 44, 46 der beiden äußeren Stege 8, 10 anliegt.

Bei der Montage wird zunächst der Eckverbinder 18 mit seinem Zapfen 14 in die Hohlkammer 11 der Profilschiene 1 eingesetzt. Die Stirnfläche 34 liegt an einer Bodenfläche 48 des Eckverbinders 18 an, wodurch eine definierte Ausrichtung erreicht wird. Der innere Steg 6 der zweiten Profilschiene 2 liegt auf der Oberfläche 49 des Schenkels 16 unmittelbar auf bzw. er wird in der Öffnung 24 des Eckverbinders 18 geführt. Die Öffnung 22 und das untere Ende 51 des inneren Steges 4 der ersten Profilschiene sind entsprechend ausgebildet, damit auch insoweit eine Verspannung erreicht werden kann.

Nachfolgend wird die zweite Profilschiene 2 hinzugefügt und zwar derart, daß der Ansatz 20 durch die fluchtenden Öffnungen 22, 24 hindurchgeschoben wird. Nun wird von der Außenseite 40 her das Verbindungselement 30 in das Loch 26 und die Ausnehmung 28 des Zapfens 14 eingeschoben. Das Verbindungselement 30 ist hier als eine Schraube ausgebildet, welche in einfacher Weise in die Ausnehmung 28 eingeschraubt wird, wobei nachfolgend mittels eines Federringes 50 eine Drehsicherung erreicht wird. Wie ersichtlich, weist der Eckverbinder 18 im äußeren Eckbereich eine sich senkrecht zur Zeichenebene erstreckende Längsnut 52 auf, in welcher sich der Kopf des Verbindungselementes 30 befindet. Diese Längsnut 52 wird ebenso wie die Kanten 44 und 46 mittels des Verblendungselementes 42 abgedeckt. Das Verblendungselement 42 kann mittels einer Schraube angeschraubt sein. Alternativ kann auch eine Schnapp-Verbindung vorgesehen sein, um das Verblendungselement 42 in dem Eckbereich einzuclipsen.

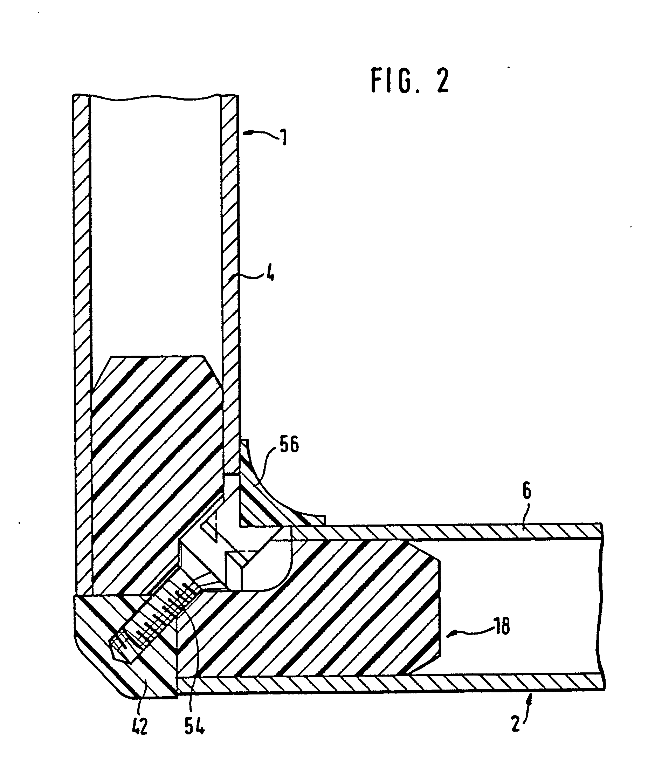

Fig. 2 zeigt die Eckverbindung in einer anderen Schnittebene, wobei nunmehr das Verblendungselement 42 mittels einer Schraube 54 an dem Eckverbinder 18 angeschraubt ist. Die oben erwähnte Aussparung 36 ist hier noch etwas erweitert, damit die Schraube 54 von innen her eingeschraubt werden kann. Auch die Profilschienen 1, 2 bzw. deren innere Stege 4, 6 sind im Bereich dieser Schraube 54 in der dargestellten Weise verkürzt. Mittels einer innen abgerundeten Blendleiste 56, die sich über die gesamte Breite der Profilschienen erstreckt, wird u. a. auch die für die Schraube 54 vorhandene Öffnung zwischen den inneren Stegen 4, 6 abgedeckt.

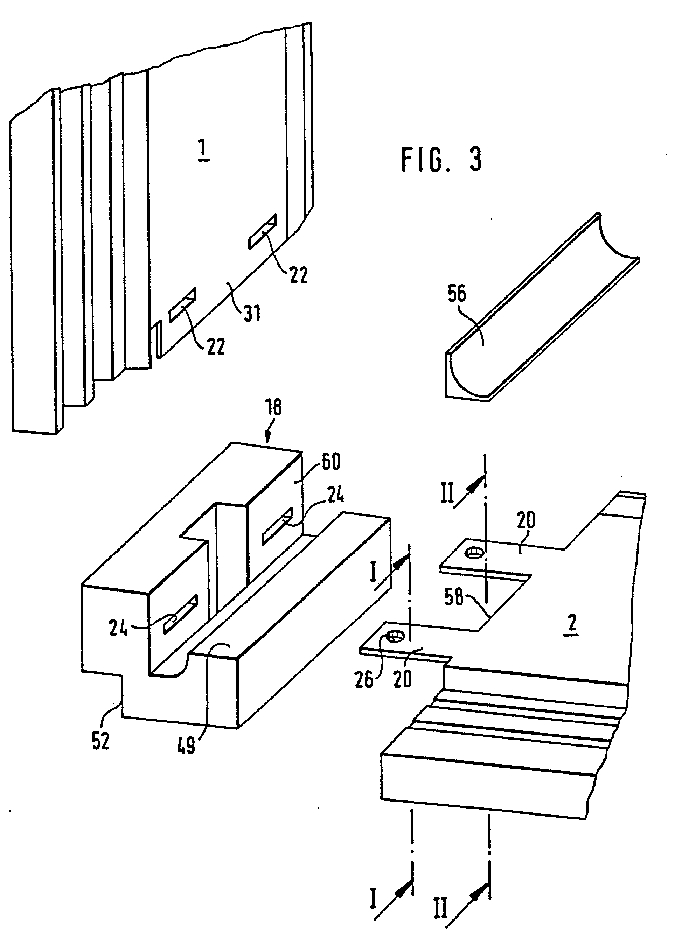

Die explosionsartige Darstellung gemäß Fig. 3 zeigt die erste Profilschiene 1 mit zwei Öffnungen 22. Der Eckverbinder 18 weist ebenfalls zwei Öffnungen 24 auf. Durch die Schnittlinie 1 bzw. 11 ist die Lage der Schnitte gemäß Fig. 1 und 2 angedeutet. Ferner weist auch die Profilschiene 2 zwei Ansätze 20 auf, mittels welchen im Zusammenwirken mit dem Eckverbinder 18 die oben bereits eingehend erläuterte Verbindung mit der Profilschiene 1 erreicht wird. Der Eckverbinder 18 erstreckt sich praktisch über die gesamte Breite der beiden Profilschienen 1 bzw. 2. Da der Eckverbinder 18 mit seinen Zapfen in die Hohlkammern der Profilschienen 1 und 2 über eine große Breite eingreift, wird eine definierte Ausrichtung der beiden Profilschienen 1 und 2 gewährleistet. Die zweite Profilschiene 2 liegt mit ihrer Stirnkante 58 im montierten Zustand an der Innenfläche 31 der ersten Profilschiene an. Aufgrund des oben erläuterten Versatzes der geometrischen Achsen des Loches 26 sowie der Ausnehmung im Eckverbinder 18 wird die Stirnkante 58 an die Innenfläche 31 gepreßt. Der genannte Abstand liegt etwa im Bereich zwischen 0,1 und 1,0 mm, wodurch die herstellungsbedingten Toleranzen usw. ohne Schwierigkeiten ausgeglichen werden können, um eine spielfreie Verbindung zu erhalten. Im Rahmen der Erfindung könnte die Stirnkante 58 in einer hier nicht weiter dargestellten Variante auch unmittelbar an der Innenfläche 60 des Eckverbinders 18 anliegen, wobei ebenfalls der genannte Abstand vorhanden ist. Es ist ersichtlich, daß auch hierbei eine Verspannung von Eckverbinder und Profilschiene 2 erreicht wird.

**Patentansprüche**

1. Eckverbindung einer ersten und einer zweiten Profilschiene (1, 2) welche jeweils zwischen einem inneren und einem äußeren Steg (4, 6; 8, 10) eine Hohlkammer (11, 12) aufweisen mit einem Eckverbinder (18), der mit einem ersten bzw. zweiten Zapfen (14, 16) in die Hohlkammer (11, 12) der ersten bzw. zweiten Profilschiene (1, 2) hineingesteckt ist, wobei im ersten Zapfen (14) eine Ausnehmung (28) vorgesehen ist, in die ein im wesentlichen in Längsrichtung der ersten Profilschiene (1) verlaufendes Verbindungselement (30) greift, dadurch gekennzeichnet, daß der innere Steg (4) der ersten Profilschiene (1) sich in die Hohlkammer (12) der zweiten Profilschiene (2) erstreckt und eine Öffnung (22) aufweist und daß der innere Steg (6) der zweiten Profilschiene (2) einen Ansatz (20) aufweist, der sich durch die Öffnung (22) des inneren Steges (4) der ersten Profilschiene (1) in eine Öffnung (24) im ersten Zapfen (14) erstreckt und dort ein Loch (26) aufweist, durch welches das Verbindungselement (30) sich in die Ausnehmung (28) des ersten Zapfens (14) erstreckt.

2. Eckverbindung nach Anspruch 1, dadurch gekennzeichnet, daß der Ansatz (20) über eine Endkante (46) des äußeren Steges (10) der zweiten Profilschiene (2) hinausragt.

3. Eckverbindung nach Anspruch 1 oder 2, dadurch gekennzeichnet, daß die geometrische Achse (27) des Loches (26) zur geometrischen Achse (29) der Ausnehmung (28) vom Zapfen (14) in einem Abstand (25), und zwar in Richtung zum inneren Steg (4) der ersten Profilschiene (1), angeordnet ist, wobei die zweite Profilschiene (2) mit ihrer Stirnkante (58) an der Innenfläche (31) der ersten Profilschiene (1) anliegt.

4. Eckverbindung nach einem der Ansprüche 1 bis 3, dadurch gekennzeichnet, daß der Ansatz (20) und das Loch (26) der zweiten Profilschiene gleichzeitig in einem einzigen Stanzvorgang hergestellt sind.

5. Eckverbindung nach einem der Ansprüche 1 bis 4, dadurch gekennzeichnet, daß der Ansatz (20) mit seiner Stirnfläche (32) sowie der innere Steg (4) mit seiner Stirnfläche (34) einen Abstand zu dem äußeren Steg (8, 10) der jeweils anderen Profilschiene (1, 2) aufweisen.

6. Eckverbindung nach einem der Ansprüche 1 bis 5, dadurch gekennzeichnet, daß im Eckbereich zwischen den äußeren Stegen (8, 10) der beiden Profilschienen (1, 2) in Verblendungselement (42) angeordnet ist.

.

## Claims

1. A corner connection of a first and second profile rail (1, 2) which have a respective hollow chamber (11, 12) between an inner and outer web (4, 6; 8, 10) with a corner connector (18) which is inserted with a first or second peg (14, 16) into the hollow chamber (11, 12) of the first and second profile rail (1, 2) wherein a recess (28) is provided in the first peg (14), into which recess a connecting element (30) running substantially in the longitudinal direction of the first profile rail (1) engages, characterised in that the inner web (4) of the first profile rail (1) extends into the chamber (12) of the second profile rail (2) and has an opening (22), and in that the inner web (6) of the second profile rail (2) has a projection (20) which extends through the opening (22) of the inner web (4) of the first profile rail (1) into an opening (24) in the first peg (14) and has a hole (26) through which the connecting element (30) extends into the recess (28) of the first peg (14).

2. A corner connection according to claim 1, characterised in that the projection (20) protrudes beyond an end edge (46) of the outer web (10) of the second profile rail (2).

3. A corner connection according to claim 1 or 2, characterised in that the geometric axis (27) of the hole (26) is arranged at distance (25), in the direction of the inner web (4) of the first profile rail (1), from the geometric axis (29) of the recess (28) in the peg (14) the second profile rail (2) resting with its front edge (58) on the inner face (31) of the first profile rail (1).

4. A corner connection according to one of claims 1 to 3 characterised in that the projection (20) and the hole (28) of the second profile rail are produced simultaneously in a single stamping process.

5. A corner connection according to one of claims 1 to 4, characterised in that the projection (20) with its end face (32) as well as the inner web (4) with its end face (34) are at a distance from the outer web (8, 10) of the other respective profile rail (1, 2).

6. A corner connection according to one of claims 1 to 5, characterised in that a facing element (42) is arranged in the corner region between the outer webs (8, 10) of the two profile rails (1, 2).

## Revendications

1. Assemblage angulaire servant à assembler un premier et un deuxième profilés (1, 2) dont chacur présente une chambre (11, 12) entre une semelle intérieure et une semelle extérieure (4, 6; 8, 10), comprenant un raccord d'angle (18) qui est engagé par une première et une deuxième branches (14, 16) dans les chambres (11, 12) du premier et du deuxième profilés (1, 2), cependant que, dans la première branche (14), est prévu un évidement (28) dans lequel s'engage un élément d'assemblage (30) qui s'étend sensiblement dans la direction longitudinale du premier profilé (1), caractérisé en ce que la semelle intérieure (4) du premier profilé (1) pénètre dans la chambre (12) du deuxième profilé (2) et présente une ouverture (22) et en ce que la semelle intérieure (6) du deuxième profilé (2) présente un prolongement (20) qui pénètre à travers l'ouverture (22) de la semelle intérieure (4) du premier profilé (1), dans une ouverture (24) de la première branche (14) et présente à cet endroit un trou (26) à travers lequel l'élément d'assemblage (30) pénètre dans l'évidement (28) de la première branche (14).

2. Assemblage angulaire selon la revendication 1, caractérisé en ce que le prolongement (20) s'étend au-delà d'un bord d'extrémité (46) de la semelle extérieure (10) du deuxième profilé (2).

3. Assemblage angulaire selon la revendication 1 ou la revendication 2, caractériséen ce que l'axe géométrique (27) du trou (26) est disposé à une certaine distance (25) de l'axe géométrique (29) de l'évidement (28) de la branche (14) et, plus précisément, vers la semelle intérieure (4) du premier profilé (1), le deuxième profilé (2) étant appuyé par son bord frontal (58) contre la surface interne (31) du premier profilé (1).

4. Assemblage anguiaire selon l'une des revendications 1 à 3, caractérisé en ce que le prolongement (20) et le trou (26) du deuxième profilé sont produits en même temps en une seule opération de decoupage.

5. Assemblage angulaire selon l'une des revendications 1 à 4, caractérisé en ce que le proiongement (20), au droit de sa surface frontale (32), et la semelle intérieure (4), au droit de sa surface frontale (34), se trouvent chacun à un certain écartement de la semelle extérieure (8, 10) de l'autre profilé (1, 2).

6. Assemblage angulaire selon l'une des revendications 1 à 5, caractérisé en ce qu'un élément d'habillage (42) est disposé dans la région de l'angle formé entre les semelles extérieures (8, 10) des deux profilés (1, 2).

# FIG. 1

FIG. 2

FIG. 3